# EUROPEAN PATENT SPECIFICATION

(11) **EP 1 705 731 B1**
(45) Date of publication and mention of the grant of the patent: **25.03.2009**
(21) Application number: 06000033.8
(22) Date of filing: 02.01.2006
(51) Int. Cl.: H01M 2/04, H01M 2/02, H01M 2/10, H01M 2/20, H01M 10/34

(54) **Secondary battery with injection molded resin casing having shallow compartments for housing electrode plate groups.**
Sekundäre Batterie mit eingespritztem Harzgehäuse, dass seichte Abteilungen für die Unterbringung von Elektrodenplattengruppen hat
Pile secondaire avec encaissage en résine moulé par injection ayant des compartiments peu profonds pour le logement des groupes de plaque d'électrode

(30) Priority: 25.01.2005 JP 2005016566
(43) Date of publication of application: 27.09.2006
(73) Proprietor: Toyota Jidosha Kabushiki Kaisha, Toyota-shi, Aichi-ken, 471-8571 (JP)
(72) Inventor: Ogata, Yoshiaki, Kosai-shi, Shizuoka-ken 431-0452 (JP); Hamada, Shinji, Kosai-shi, Shizuoka-ken 431-0452 (JP); Eto, Toyohiko, Kosai-shi, Shizuoka-ken 431-0452 (JP)
(74) Representative: Kuhnen & Wacker

(56) References cited:
- US-A- 5 567 544
- US-A1- 2003 157 402
- US-A1- 2004 209 162

## Description

### BACKGROUND OF THE INVENTION

### 1. Field of the Invention

The present invention relates to a secondary battery.

### 2. Description of Related Art

In recent years, various types of secondary batteries have been proposed as a power source for portable instrument or devices or another power source for electric vehicles or hybrid electric vehicles (for example, Japanese unexamined patent application publications Nos. 2001-176487 and 2003-282043).

Each of the secondary batteries described in the above publications comprises an integrated battery case (a case body) including a plurality of rectangular-parallelepiped battery jars and a cover member. Each of battery jars has short side surfaces which are narrow in width and long side surfaces which are wide in width. The battery jars are integrally connected to each other at respective short side surfaces. The cover member integrally closes an upper opening of each battery jar. In each battery jar, there is housed a electrode plate group comprising a plurality of positive electrode plates and negative electrode plates which are laminated in parallel with the long side surfaces, constituting a cell. Further, the cells are connected in series at their ends adjoining in a direction of connection between the battery jars. Thus, an assembled-type secondary battery is fabricated.

Each of the secondary batteries disclosed in the above publications, meanwhile, is formed such that depth (height) is the largest dimension among its depth, width, and length. In the case where the integrated battery case comprising the above battery jars integrally connected in series is to be integrally molded from resin by injection molding, such battery case is hard to manufacture because of the large depth of each battery jar, leading to a high manufacturing cost.

Document US 2004/0209162 A1 further discloses a flat elongated alkaline battery comprising an outer metal housing and plurality of individual alkaline cells housed therein. The outer housing has a major surface which is a flat polygon. The outer metal housing is a cuboid. The individual cells comprise an anode slab comprising zinc, cathode slab, comprising manganese dioxide and separator therebetween. Each cell is formed by stacking the anode, separator, and cathode body to body. Each cell has at least one surface which is polygonal. The individual cells are aligned in a row edge to edge to form a pack of cells having the same thickness as the thickness of an individual cell. The pack of cells are inserted into a common hydrogen permeable plastic container and encased therein. The cells encased in the plastic container are housed within the interior of the metal outer casing. The cells are electrically connected in parallel to the battery positive and negative terminals. In an alternative embodiment the flat elongated alkaline battery comprises only a single alkaline cell encased within a hydrogen permeable plastic container which is housed within the interior of a metal housing. The outer metal housing is preferably a cuboid.

A further battery is known from US 5,567,544. This battery is assembled in the form of a lightweight structural panel and including isolated battery cells. Each of the cells includes a honeycomb structure wherein each film-like layer in the honeycomb structure is an electrode stack. Each of the electrode stacks includes an elongated cathode, an elongated separator, and an elongated anode. The separator is wetted with an electrolyte solution to facilitate the electrochemical reaction. The electrochemical reaction may be that of an NiMH2 battery, an NiH battery, an Li+ battery, an NiCd battery, a Lead-acid battery, or any other suitable electrochemical reaction. Alternatively, the battery cell could be composed of a foam-like cathode, foam-like separator, and a foam-like anode. With either embodiment, the invention achieves the storage of electrochemical energy in a structure with a multitude of voids defined therein so that the structure is relatively stiff, yet light weight.

### SUMMARY OF THE INVENTION

The present invention has been made in view of the above circumstances and has an object to provide an inexpensive secondary battery provided with a battery case (a case body or a shell member) which can be manufactured from resin inexpensively by injection molding.

Additional objects and advantages of the invention will be set forth in part in the description which follows and in part will be obvious from the description, or may be learned by practice of the invention. The objects and advantages of the invention may be realized and attained by means of the instrumentalities and combinations particularly pointed out in the appended claims.

To achieve the purpose of the invention, there is provided a secondary battery according to claim 1.

In the secondary battery of the invention, the case body member of the battery case is made integrally of resin by injection molding. This battery case is compartmentalized into the cover member and the case body member in the direction of the minimum dimension among width, height, and length of the battery case, which are perpendicular to one another, so that the depth of the case body member is shallowest than other cases where the battery case is compartmentalized into the cover member and the case body member in a direction other than the minimum dimension). This makes it possible to facilitate injection molding of the case body member for manufacture of the secondary battery of the present invention. Easy insertion of the electrode plate group into the housing part of the case body member can be accomplished. Thus, the secondary battery of the present invention can be provided inexpensively.

In the above secondary battery, preferably, the cover member includes a metal plate and a covering part that is made of resin and covers the metal plate.

In general, a secondary battery provided with a resin battery case have disadvantages that vapor, oxygen gas, hydrogen gas, and others would pass through the battery case to gradually leak out over the long term. In the nickel hydride storage battery, particularly, hydrogen gas in the battery decreases when part of hydrogen gas passes through the resin battery case to leak out, so that the capacity becomes out of balance between positive and negative electrodes, which deteriorates battery characteristics.

The secondary battery of the present invention, in contrast, is arranged such that the cover member includes the metal plate and the resin covering part which covers the metal plate. With this cover member including the metal plate, it is possible to prevent hydrogen gas or the like from passing through the cover member to leak out. Consequently, the secondary battery of the present invention can prevent leakage of the hydrogen gas or the like to the outside.

Moreover, since the secondary battery will heat in association with charge/discharge, the secondary battery needs cooling appropriately. In the secondary battery of the present invention, in contrast, the cover member including the metal plate is good in heat dispersion characteristics and hence can cool the secondary battery appropriately.

In the above secondary battery, preferably, the cover member includes a resin plate and a metallic layer that is made of a metallic foil and laminated on at least one of an external surface and an internal surface of the resin plate.

In the secondary battery of the present invention, the cover member includes the resin plate and the metal layer that is made of a metallic foil laminated at least one of the external surface and internal surface of the resin plate. Providing the metal layer in the cover member makes it possible to prevent hydrogen gas or the like from passing through the cover member to leak out. Accordingly, the secondary battery of the present invention can prevent leakage of hydrogen gas or the like to the outside.

According to another aspect of the invention, there is provided a secondary battery according to claim 4.

In the secondary battery of the present invention, the case body member includes the shell member having the frame and the partition wall and the closing member for closing the opening of the shell member. This shell member is made integrally of resin by injection molding. Further, the battery case is compartmentalized into the cover member and the case body member in a direction of the minimum dimension among width, height, and length of the battery case, which are perpendicular to one another, so that the depth of the case body member is shallowest. Hence, the length of a frame part of the shell member is the shortest. This makes it possible to facilitate injection molding of the shell member for manufacture of the secondary battery of the invention. Easy insertion of the electrode plate group into the housing part of the case body member can be accomplished. Thus, the secondary battery of the present invention can be provided inexpensively.

In the above secondary battery, preferably, the cover member includes a metal plate and a covering part that is made of resin and covers the metal plate.

The secondary battery of the present invention is arranged such that the cover member includes the metal plate and the resin covering part which covers the metal plate. With this cover member provided with the metal plate, it is possible to prevent hydrogen gas or the like from passing through the cover member to leak out. Consequently, the secondary battery of the present invention can prevent leakage of the hydrogen gas or the like to the outside.

Moreover, since the secondary battery will heat in association with charge/discharge, the secondary battery needs cooling appropriately. In the secondary battery of the present invention, in contrast, the cover member including the metal plate is good in heat dispersion characteristics and hence can cool the secondary battery appropriately.

Alternatively, in the above secondary battery, the cover member may include a resin plate and a metallic layer that is made of a metallic foil and laminated on at least one of an external surface and an internal surface of the resin plate.

In the secondary battery of the present invention, the cover member includes the resin plate and the metal layer that is made of a metallic foil laminated at least one of the external surface and internal surface of the resin plate. Providing the metal layer in the cover member makes it possible to prevent hydrogen gas or the like from passing through the cover member to leak out. Accordingly, the secondary battery of the present invention can prevent leakage of hydrogen gas or the like to the outside.

In any one of the above secondary batteries, preferably, the closing member includes a metal plate and a covering part that is made of resin and covers the metal plate.

In the secondary battery of the present invention, the closing member includes the metal plate and the resin covering part which covers the metal plate. With this closing member provided with the metal plate, it is possible to prevent hydrogen gas or the like from passing through the closing member to leak out. Consequently, the secondary battery of the present invention can prevent leakage of the hydrogen gas or the like to the outside. In addition, the closing member including the metal plate is good in heat dispersion characteristics and hence can cool the secondary battery appropriately.

Alternatively, in any one of the above secondary batteries, the closing member may include a resin plate and a metallic layer that is made of a metallic foil and laminated on at least one of an external surface and an internal surface of the resin plate.

In the secondary battery of the present invention, the closing member includes the resin plate and the metal layer that is made of a metallic foil laminated at least one of the external surface and internal surface of the resin plate. Providing the metal layer in the closing member makes it possible to prevent hydrogen gas or the like from passing through the closing member to leak out. Accordingly, the secondary battery of the present invention can prevent leakage of hydrogen gas or the like to the outside.

In any one of the above secondary batteries, preferably, the case body member is provided with one or more partition walls that partition the case body member into the plurality of housing parts, each of the partition walls is formed with one or more through-holes each of which provides communication between adjoining two of the housing parts, and the positive electrode plate and the negative electrode plate placed in the housing part are electrically connected directly or indirectly to any one of the positive electrode plate and the negative electrode plate placed in the adjoining housing part through the one or more through-holes.

In the secondary battery of the present invention, the positive and negative electrode plates placed in each housing part are electrically connected directly or indirectly to the positive and negative electrode plates placed in each adjoining housing part through the through-holes formed in the partition walls. In case where the thus structured secondary battery is to be manufactured, the positive and negative electrode plates (the electrode plate group) are inserted in each housing part and then they are connected to each other directly or indirectly through any members by welding. Accordingly, it is preferable for the case body member to have a larger opening for providing good workability to weld the positive and negative electrode plates in adjoining housing parts directly or indirectly by means of another members.

In the secondary battery of the present invention, in contrast, as mentioned above, the battery case is compartmentalized into the cover member and the case body member in the direction of the minimum dimension among width, height, and length of the battery case, which are perpendicular to one another. This configuration can provide a largest insertion opening to the case body member. Accordingly, the secondary battery of the present invention can achieve a good workability for welding the positive and negative electrode plates in the adjoining housing parts by utilizing the insertion opening. A manufacturing cost can be held down to accomplish a less expensive secondary battery.

The configuration to directly or indirectly connect the positive and negative electrode plates placed in the adjoining housing parts respectively may include for example a configuration that a positive electrode current collector connected to each of the plurality of positive electrode plates belonging to the electrode plate group housed in one housing part is connected to a negative electrode current collector connected to each of the plurality of negative electrode plates belonging to the electrode plate group housed in the other housing part through the through-holes formed in the partition wall. In another alternative, the above positive and negative electrode collecting plates may be connected to each other through a connecting member previously provided in the through-hole. Also, the positive electrode plates and the negative electrode plates may be directly connected to this connecting member.

In the above secondary battery, preferably, the positive electrode plate and the negative electrode plate constituting each electrode plate group are laminated in the direction of minimum dimension of the battery case, the case body member includes the housing parts arranged in line in a direction perpendicular to the direction of minimum dimension, at least one of the through-holes in each partition wall is an inter-electrode plate through-hole located between the electrode plate groups housed in adjoining two of the housing parts interposing the partition wall, and the positive electrode plate and the negative electrode plate placed in the housing part are electrically connected directly or indirectly to any one of the positive electrode plate and the negative electrode plate placed in the adjoining housing part through at least the inter-electrode plate through-hole of the through-holes.

In the secondary battery of the present invention, the positive and negative electrode plates placed in each housing part are electrically connected directly or indirectly through another member to either of the positive and negative electrode plates placed in the adjoining housing part through at least the inter-electrode plate through-hole of the through-holes formed in the partition wall. Since the positive and negative electrode plates in one housing part are electrically connected to those in another housing part through the inter-electrode plate through-hole, a connection path between pole plates can be shortened, reducing internal resistance, thus enhancing output power of the battery.

In the conventional secondary battery disclosed in JP2003-282043A, meanwhile, the integral battery case is formed with openings in at least one side wall at each position corresponding to the partition wall so that the partition wall and the battery jars (housing parts) on both sides thereof are made visible from outside. Also, the electrically conductive connection plate is placed through the partition wall (inserted in the inter-electrode plate through-hole) and part of the connection plate itself appears in the opening. The current collector coupled with the lead portion of the electrode plate group is connected to the electrically conductive connection plate by welding while utilizing the opening. As with the secondary battery of the present invention, the connection path between the pole plates can be shortened, reducing internal resistance, thus enhancing output power of the battery.

According to the technique disclosed in JP2003-282043A, however, the integrated battery case has to be provided with an additional opening for connection between the current collector and the electrically conductive connection plate. This would cause an increase in manufacturing cost of the integrated battery case (case body member). It is further necessary to seal the opening with a sealing member after welding the current collector and the electrically conductive connection plate. Thus, the number of parts and the number of works are increased, leading a further increased manufacturing cost.

In the secondary battery of the present invention, in contrast, as mentioned above, the battery case is compartmentalized into the cover member and the case body member in the direction of minimum dimension among width, height, and length of the battery case, which are perpendicular to one another. Additionally, the positive and negative electrode plates constituting the electrode plate group are laminated in the minimum dimension direction and the housing parts (hence, the electrode plate groups) are arranged in line in a direction perpendicular to the minimum dimension direction.

With the above structure, it is possible to perform the works such as welding or the like through the insertion opening to connect, of the electrode plate groups placed in adjoining housing parts, the positive or negative electrode plates of one of the electrode plate group to the positive or negative electrode plates of the adjoining electrode plate group directly or indirectly through another member. Herein, a concrete explanation will be made exemplifying a case where the electrically conductive connection plate is provided in the inter-electrode plate through-hole and, through this electrically conductive connection plate, the positive electrode current collector and the negative electrode current collector placed in · adjoining housing parts are connected through the electrically conductive connection plate.

According to the above structure, even where the inter-electrode plate through-hole is provided in any position of the partition wall between two electrode plate groups, the connected position (welded position) between the electrically conductive connection plate provided in the inter-electrode plate through-hole and the positive electrode current collector connected to the positive electrode plates can be made visible from outside through the insertion opening. Similarly, the connected position (welded position) between the electrically conductive connection plate provided in the inter-electrode plate through-hole and the negative electrode current collector connected to the negative electrode plates can be made visible from outside through the insertion opening. Further, in the present invention, the battery case is designed to provide the insertion opening of a largest area. Accordingly, the work of connecting (welding) the positive electrode current collector and the electrically conductive connection plate and the work of connecting (welding) the negative electrode current collector and the electrically conductive connection plate can be facilitated through the insertion opening.

Consequently, the secondary battery of the present invention, different from the secondary battery of JP2003-282043, does not have to include additional opening for connection through the inter-electrode plate through-hole, and needs no sealing of the opening with a sealing member. Thus, an inexpensive secondary battery can be realized.

In addition to the path for connecting the pole plates through the inter-electrode plate through-hole, a bypass path may be provided in parallel to the above path to connect them through another through-hole formed in the partition wall.

### BRIEF DESCRIPTION OF THE DRAWINGS

The accompanying drawings, which are incorporated in and constitute a part of this specification illustrate an embodiment of the invention and, together with the description, serve to explain the objects, advantages and principles of the invention.

In the drawings,
Fig. 1 is a perspective view of a secondary battery in a first embodiment;
Fig. 2 is an exploded perspective view of a battery case in the first embodiment;
Fig. 3 is a sectional view of a electrode plate group in the first embodiment;
Fig. 4 is a sectional view of a cover member in the first and second embodiments;
Fig. 5 is a sectional view of a cover member in another embodiment;
Fig. 6 is a sectional view of a cover member in another embodiment;
Fig. 7 is a longitudinal sectional view of the secondary battery in the first embodiment;
Fig. 8 is a cross sectional view of the secondary battery in the first embodiment;
Fig. 9 is a perspective view of a secondary battery in a second embodiment; and
Fig. 10 is an exploded perspective view of a battery case in the second embodiment.

### DETAILED DESCRIPTION OF THE PREFERRED EMBODIMENTS

A detailed description of preferred embodiments of the present invention will now be given referring to the accompanying drawings.

### [First Embodiment]

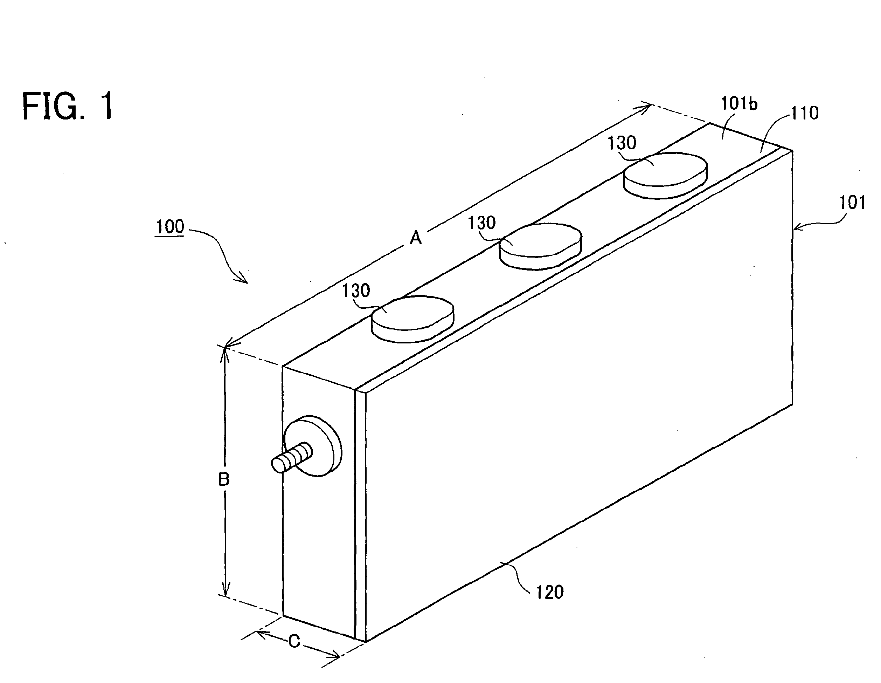

Referring to Fig. 1, a secondary battery 100 in the first embodiment is a nickel hydride storage battery provided with a battery case 101 including a case body member 110, a cover member 120, and liquid inlet lids 130.

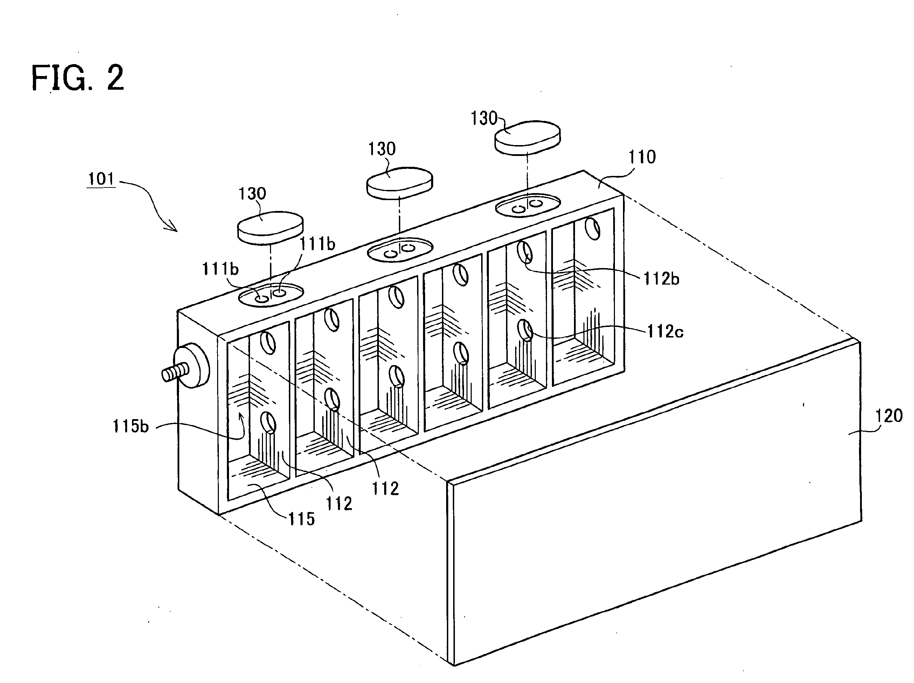

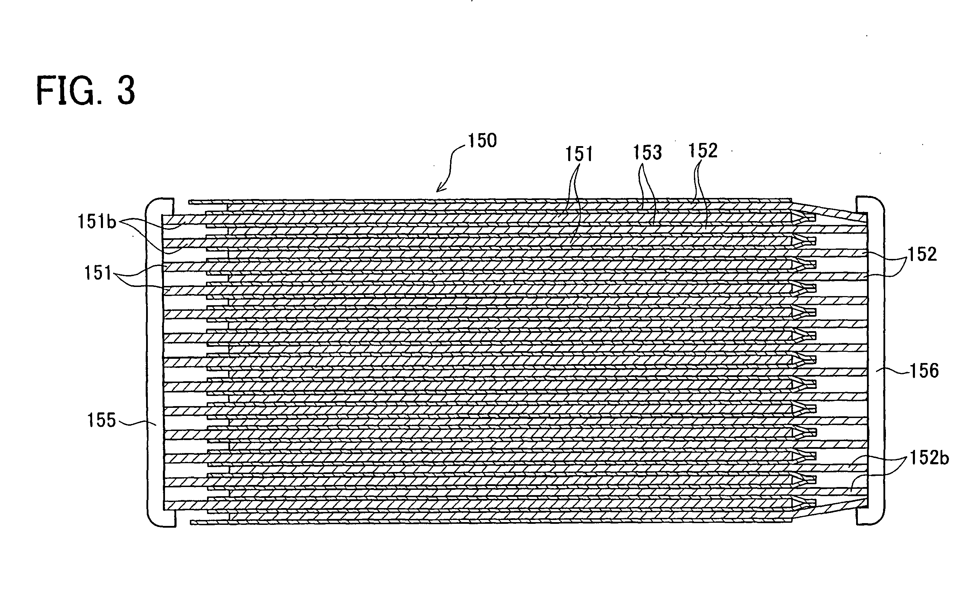

The case body member 110 includes, as shown in Fig. 2 (an exploded perspective view of the battery case 101), six housing parts (cavities) 115 of a rectangular parallelepiped shape, partitioned by partition walls 112. Each housing part 115 has an insertion opening 115b allowing insertion of a electrode plate group 150 (see Fig. 3) and a liquid inlet 111b allowing injection of electrolytic solution (not shown). This case body member 110 is made integrally of resin by injection molding.

In the secondary battery 100 in the first embodiment, as shown in Fig. 1, the battery case 101 is compartmentalized into the cover member 120 and the case body member 110 in a direction of depth C (referred to as a "minimum dimension direction" in the first embodiment) which is the smallest in dimension among width A, height B, and depth C. Specifically, the case body member 110 is formed to be shallowest (smallest) in the depth. Injection molding of the case body member 110 can be facilitated for manufacture of the secondary battery 100. Also, the electrode plate group 150 can be readily inserted into the housing part 115. Consequently, the secondary battery 100 in the first embodiment can be provided inexpensively.

In each of the housing parts 115 of the battery case 101, there are placed the electrode plate group 150 (see Fig. 3) and the electrolytic solution (not shown). The electrode plate group 150 includes, as shown in Fig. 3, positive electrode plates 151, negative electrode plates 152, and packing separators 153. The positive electrode plates 151 are enclosed one in each of the packing separators 153. The positive electrode plates 151 enclosed in the packing separators 153 and the negative electrode plates 152 are alternately laminated. Each positive electrode plate 151 is connected, at a lead portion 151b in one end thereof (a left end portion in Fig. 3), to a positive electrode current collector 155. Similarly, each negative electrode plate 152 is connected, at a lead portion 152b in one end thereof (a right end portion in Fig. 3), to a negative electrode current collector 156.

The positive electrode plate 151 may be for example an electrode plate formed of an active material base made of foamed nickel or the like, on which an active material such as nickel hydroxide is supported. The negative electrode plate 152 may be for example an electrode plate including hydrogen storing alloy as a negative electrode component. The separator 153 may be for example nonwoven fabric made of synthetic fiber subjected to a hydrophilic treatment. The electrolytic solution may be alkaline aqueous solution having a specific gravity of 1.2 to 1.4 including KOH.

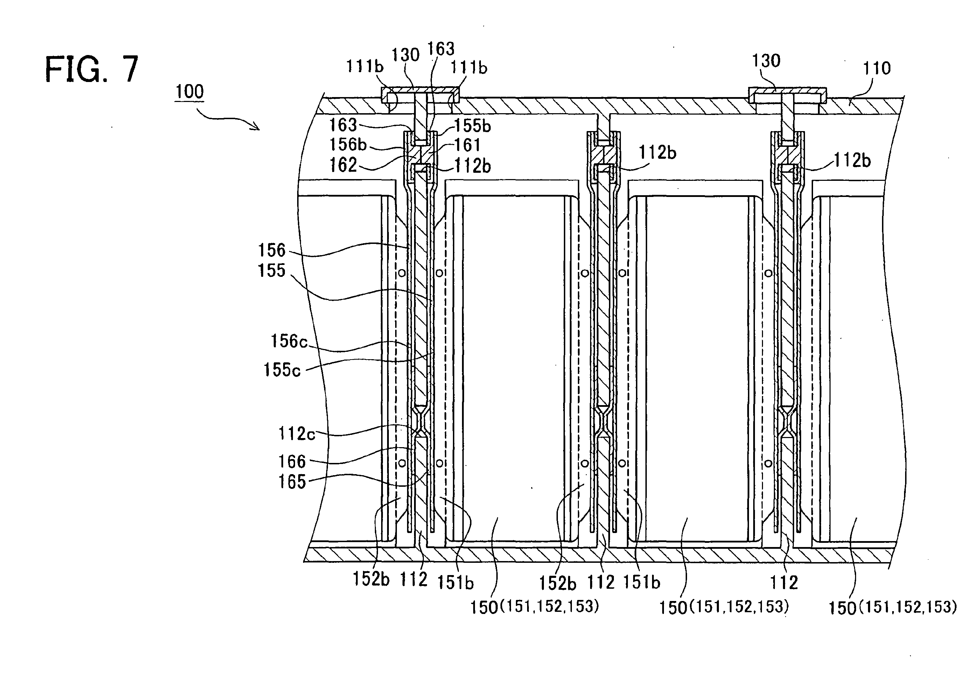

Each lid 130 is made of resin and has a substantially flat, elliptic shape, which covers two adjacent liquid inlet 111b (see Figs. 2 and 7).

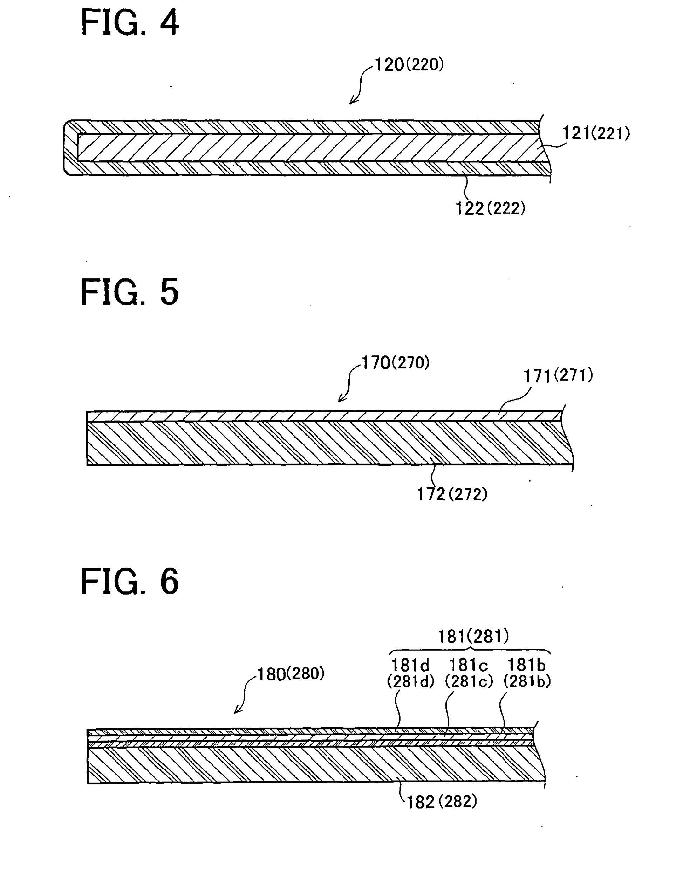

The cover member 120 is of a rectangular plate shape, which closes the insertion openings 115b of the case body member 110 (see Figs. 1 and 2). This cover member 120 includes a metal plate 121 and a resin covering part 122 which covers the metal plate 121, as shown in a sectional view in Fig. 4.

Meanwhile, a secondary battery provided with a resin battery case generally has disadvantages that vapor, oxygen gas, hydrogen gas, and others would pass through the battery case to gradually leak out over the long term. In the nickel hydride storage battery, particularly, hydrogen gas in the battery decreases when part of hydrogen gas passes through the resin battery case to leak out, so that the capacity between positive and negative electrodes is likely to become out of balance, which deteriorates battery characteristics.

In the secondary battery 100 in the first embodiment, the case body member 110 of the battery case 101 is made of resin, but the cover member 120 includes the metal plate 121. With this cover member 120 including the metal plate 121, hydrogen gas or the like can be prevented from passing through the cover member 120 to leak out. Thus, the secondary battery 100 in the first embodiment can prevent leakage of hydrogen gas or the like to the outside.

Moreover, since the secondary battery will heat in association with charge/discharge, the secondary battery needs cooling appropriately. In the secondary battery of the first embodiment, in contrast, the cover member 120 includes the metal plate 121 as described above. Therefore the cover member 120 has good heat dispersion characteristics and hence can cool the secondary battery 100 appropriately.

Herein, a detailed explanation is made on an internal structure of the battery case 101, especially, a connecting structure of the positive electrode plates 151 and the negative electrode plates 152 of each electrode plate group 150.

Each of the partition walls 112 of the case body member 110 is formed with a first through-hole 112b and a second through-hole 112c, providing communication between adjoining housing parts 115 as shown in Fig. 2. To be more specific, as viewed in the direction of height B (in a vertical direction in Fig. 1) of the case body member 110, the first through-hole 112b is located in an upper end portion of the partition wall 112, while the second through-hole 112c is located slightly below the center of the partition wall 112.

Fig. 7 shows a longitudinal sectional view of the secondary battery 100, taken in the direction of height B (see Fig. 1) along a line passing the center of the first and second through-holes 112b and 112c. Referring to Fig. 7, in each first through-hole 112b, two connecting members 161 and 162 are placed. Specifically, in each partition wall 112, the connecting member 161 located in one of the adjoining housing parts 115 and the connecting member 162 located in the other housing part 115 are connected to each other in the first through-hole 112b by resistance welding. It is to be noted that an O-ring 163 is interposed between each of the connecting members 161 and 162 and the partition wall 112. This makes it possible to prevent the electrolytic solution from flowing in/out through the first through-hole 112b between the adjoining housing parts 115.

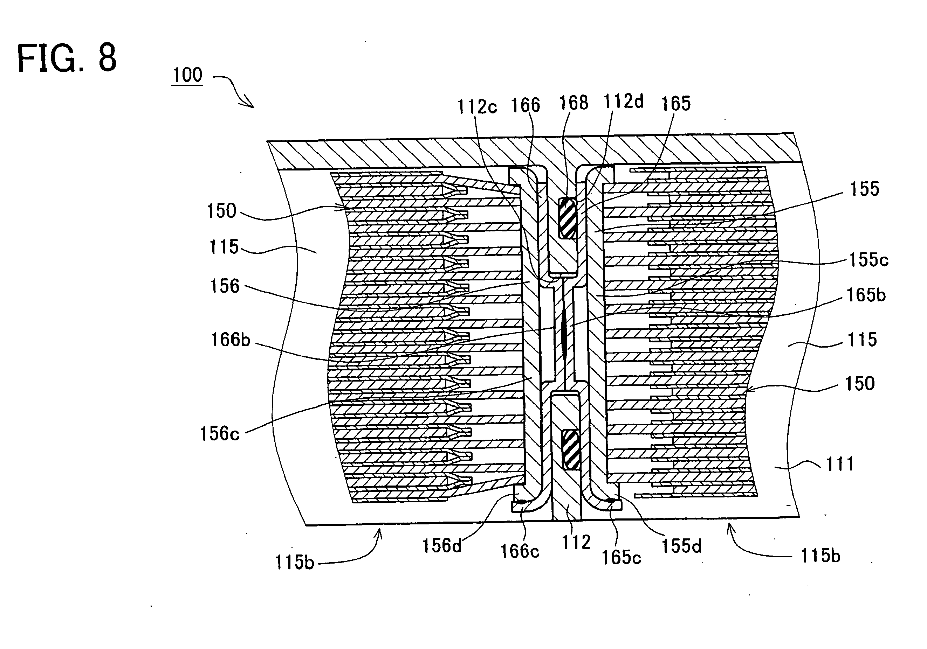

Similarly, in each second through-hole 112c, two electrically conductive connection plates 165 and 166 are placed. In each partition wall 112, specifically, the connection plate 165 located in one of the housing parts 115 and the connection plate 166 located in the other housing part 115 are connected to each other in the second through-hole 112c by resistance welding. To be more specific, the connection plates 165 and 166 are resistance-welded to each other at respective projections 165b and 166b inserted in the second through-hole 112c as shown in Fig. 8. Fig. 8 is a cross sectional view of part of the secondary battery 100, taken in the direction of the depth C (see Fig. 1) along a ling passing the center of the second through-hole 112c, in which the cover member 120 is not illustrated.

An annular groove 112d is formed in the partition wall 112 around the second through-hole 112c. An O-ring 168 is fit in this groove 112d. This O-ring 168 is held in a compressed state between the partition wall 112 and the electrically conductive connection plate 165. This makes it possible to prevent the electrolyte solution from flowing in/out between the adjoining housing parts 115 through the second through-hole 112c.

In each housing part 115, furthermore, the electrode plate group 150 including the positive and negative electrode current collectors 155 and 156 is placed as shown in Fig. 7. The positive electrode current collector 155 has a connecting portion 155c connected to the lead portions 151b of the positive electrode plates 151 and an extended portion 155b formed extending above the connecting portion 155c and connected to the connecting member 161 by resistance welding. The negative electrode current collector 156 has, similarly, a connecting portion 156c connected to the lead portions 152b of the negative electrode plates 152 and an extended portion 156b formed extending above the connecting portion 156c and connected to the connecting member 162 by resistance welding. With this structure, the positive electrode plates 151 of the electrode plate group 150 placed in one of the adjoining housing parts 115 is connected, above those electrode plate groups 150, to the negative electrode plates 152 of the electrode plate group 150 placed in the other housing part 115. Thus, two electrode plate groups 150 (cells) are connected in series.

The positive electrode current collector 155 is connected, in the connecting portion 155c slightly below the center in the vertical direction in Fig. 7, to the electrically conductive connection plate 165. To be more specific, as shown in Fig. 8, a side surface of the connecting portion 155c of the positive electrode current collector 155 and a side surface of the electrically conductive connection plate 165 are electrically connected in contact relation to each other. A bent end 155d of the positive electrode current collector 155 positioned closer to the insertion opening 115b and a bent end 165c of the electrically conductive connection plate 165 are connected by resistance welding.

Similarly, the negative electrode current collector 156 is connected, in the connecting portion 156c slightly below the center in the vertical direction in Fig. 7, to the electrically conductive connection plate 166. To be more specific, as shown in Fig. 8, a side surface of the connecting portion 156c of the negative electrode current collector 156 and a side surface of the electrically conductive connection plate 166 are electrically connected in contact relation to each other. A bent end 156d of the negative electrode current collector 156 positioned closer to the insertion opening 115b and a bent end 166c of the electrically conductive connection plate 166 are connected by resistance welding.

As above, the positive electrode plates 151 of the electrode plate group 150 located in one of the adjoining housing parts 115 and the negative electrode plates 152 of the electrode plate group 150 located in the other housing part 115 are connected through the second through-hole 112c positioned between those electrode plate groups 150. Accordingly, the connection path between the positive electrode plates 151 of one of the electrode plate groups 150 (a right one in Fig. 8) and the negative electrode plates 152 of the other electrode plate group 150 (a left one in Fig. 8) can be shortened, reducing internal resistance, thus enhancing output power of the battery. It is to be noted that the second through-hole 112c in the first embodiment 1 corresponds to an inter-electrode plate through-hole of the invention.

Meanwhile, if assigning the conventional secondary battery disclosed in e.g., JP2003-282043A, to Fig. 1 of the present embodiment, it is compartmentalized into the cover case and the case body member in the direction of height B. That is, in Fig. 1, a cover member is provided in a top part 101b and an insertion opening for insertion of a electrode plate group is formed opening toward the top part 101. Accordingly, in the case where the positive electrode plates and the negative electrode plates (i.e., the current collector and the electrically conductive connection plate) are to be connected through the inter-electrode plate through-hole (the second through-hole 112c), a welding or other works could not be performed through such insertion opening. Thus, many additional openings have to be formed. This would result in an increase in manufacturing cost of the battery case. It is further necessary to provide a sealing member for sealing each opening, which causes an increase in the number of parts, resulting in a further increase in manufacturing cost.

In the secondary battery 100 in the first embodiment, in contrast, as mentioned above, the battery case 101 is compartmentalized into the cover member 120 and the case body member 110 in the direction of the depth C (the minimum dimension direction) which is the smallest in dimension among the width A, height B, and depth C which are perpendicular to one another. In addition, each electrode plate group 150 is arranged such that its positive and negative electrode plates 151 and 152 are laminated in the direction of depth C, namely, in the minimum dimension direction. Further, the housing parts 115, that is, the electrode plate groups 150 housed in these housing parts 115, are arranged in line in the direction of width A perpendicular to the direction of depth C (the minimum dimension direction).

As it is found from Figs. 7 and 8, even when the electrically conductive connection plates 165 and 166 are brought into contact with each other in the second through-hole 112c during manufacture of the secondary battery 100, they are visible from outside through the insertion opening 115b until the electrode plate groups 150 are housed in the housing parts 115. Thus, the work of welding the electrically conductive connection plates 165 and 166 can be facilitated through the insertion opening 115b.

It is furthermore found from Figs. 7 and 8 that, until the insertion opening 115b is closed with the cover member 120, the bent end 155d of the positive electrode current collector 155 and the bent end 165c of the electrically conductive connection plate 165 remain visible from outside through the insertion openings 115b. Accordingly, the work of welding the bent end 155d of the positive electrode current collector 155 and the bent end 165c of the electrically conductive connection plate 165 can be facilitated through the insertion openings 115b.

Similarly, until the insertion opening 115b is closed with the cover member 120, the bent end 156d of the negative electrode current collector 156 and the bent end 166c of the electrically conductive connection plates 166 remain visible from outside through the insertion openings 115b. Accordingly, the work of welding the bent end 156d of the negative electrode current collector 156 and the bent end 166c of the electrically conductive connection plate 166 can be facilitated through the insertion openings 115b.

Consequently, differently from the conventional secondary battery in JP2003-282043A, the secondary battery of the present invention needs no additional opening and no sealing member and can be achieved inexpensively.

Furthermore, as described above, the battery case 101 is compartmentalized into the cover member 120 and the case body member 110 in the direction of depth C (the minimum dimension direction in the first embodiment) which is the smallest in dimension among the width A, height B, and depth C, which are perpendicular to one another (see Fig. 2). According to the above configuration, in the case body member 110, the insertion opening 115 can have a maximum dimension. In manufacture of the secondary battery 100 in the present embodiment, the workability of a welding work can be improved by utilizing the insertion opening 115b. Thus, the manufacturing cost can be held down and therefore a more inexpensive secondary battery can be provided.

The following explanation will be made on a manufacturing method of the secondary battery 100 in the first embodiment.

Firstly, the case body member 110 shown in Fig. 2 is made integrally of resin by injection molding. In each partition wall 112, subsequently, the connection members 161 and 162 are connected to each other through the first through-hole 112b by resistance welding (see Fig. 7). Note that the O-ring 163 is interposed in advance between the connecting members 161 and 162 and the partition wall 112. Similarly, in each partition wall 112, the electrically conductive connection plates 165 and 166 are connected to each other in the second through-hole 112c by resistance welding (see Fig. 8). Note that the O-ring 168 is fit in advance in the annular groove 112d of the partition wall 112 before the electrically conductive connection plate 165 is inserted in the second through-hole 112c.

The cover member 120 is fabricated by insert molding by covering the metal plate 121 with the resin covering part 122 (see Fig. 4). Additionally, the electrode plate groups 150 are made so that the positive electrode plates 151 inserted one in each of the separators 153 and the negative electrode plates 152 are alternately laminated. The lead portion 151b of each of the positive electrode plates 151 is welded to the positive electrode current collector 155 and the lead portion 152b of each of the negative electrode plates 152 is welded to the negative electrode current collector 156 (see Fig. 3). Then, each electrode plate group 150 connected to the positive electrode current collector 155 and the negative electrode current collector 156 is inserted in each corresponding housing part 150 through each insertion opening 150b (see Fig. 7).

Subsequently, the extended portion 155b of the positive electrode current collector 155 is connected to the connecting member 161 by resistance welding through the insertion opening 150b (see Fig. 7). In a similar way, the extended portion 156b of the negative electrode current collector 156 is connected to the connecting member 162 by resistance welding. Further, the bent end 155d of the positive electrode current collector 155 is connected to the bent end 165c of the electrically conductive connection plate 165 by resistance welding through the insertion opening 150b (see Fig. 8). Similarly, the bent end 156d of the negative electrode current collector 156 is connected to the bent end 166c of the electrically conductive connection plate 166 by resistance welding through the insertion opening 150b.

The case body member 110 and the cover member 120 are welded to each other by heat welding to close the insertion openings 115b. Then, through the liquid inlet 111b, a predetermined amount of electrolytic solution is injected into each housing part 150. After that, each liquid inlet lid 130 is mounted to the case body member 110 at a predetermined place by heat welding, thereby closing the liquid inlet 111b. Thus, the secondary battery 100 shown in Fig. 1 is produced.

The cover member closing the insertion openings 115b of the case body member 110 used in the first embodiment is the cover member 120 including the metal plate 121 and the resin covering part 122 covering the metal plate 121 as shown in Fig. 4. As an alternative to the cover member 120, however, for example a cover member 170 shown in Fig. 5 may be used, which includes a resin plate 172 and a metallic layer 171 made of a metallic foil (e.g., aluminum foil) laminated on the resin plate 172. The use of such cover member 170 provided with the metallic layer 171 makes it possible to prevent hydrogen gas or the like from passing through the cover member 170 to leak out.

As another alternative to the cover member 120, a cover member 180 shown in Fig. 6 may be used, which includes a resin plate 182 and a multilayer film 181 laminated on the resin plate 182. This multilayer film 182 has a three-layer structure including a first resin layer 181b, a metallic layer 181c, and a second resin layer 181d. The use of the cover member 180 provided with the metallic layer 181c also makes it possible to prevent hydrogen gas or the like from passing through the cover member 180 to leak out. The first and second resin layers 181b and 181d may be formed of a resin film made of polypropylene, for example. The metallic layer 181c may be formed of a metallic foil made of aluminum, for example.

### [Second Embodiment]

A secondary battery 200 in a second embodiment will be explained below referring to the accompanied drawings. The secondary battery 200 in the second embodiment is different in structure of the battery case from the secondary battery 100 in the first embodiment, but identical in other parts thereto. Thus, the following explanation will be made focusing on the battery case different from that in the first embodiment. Similar parts will not be explained or will be briefly explained.

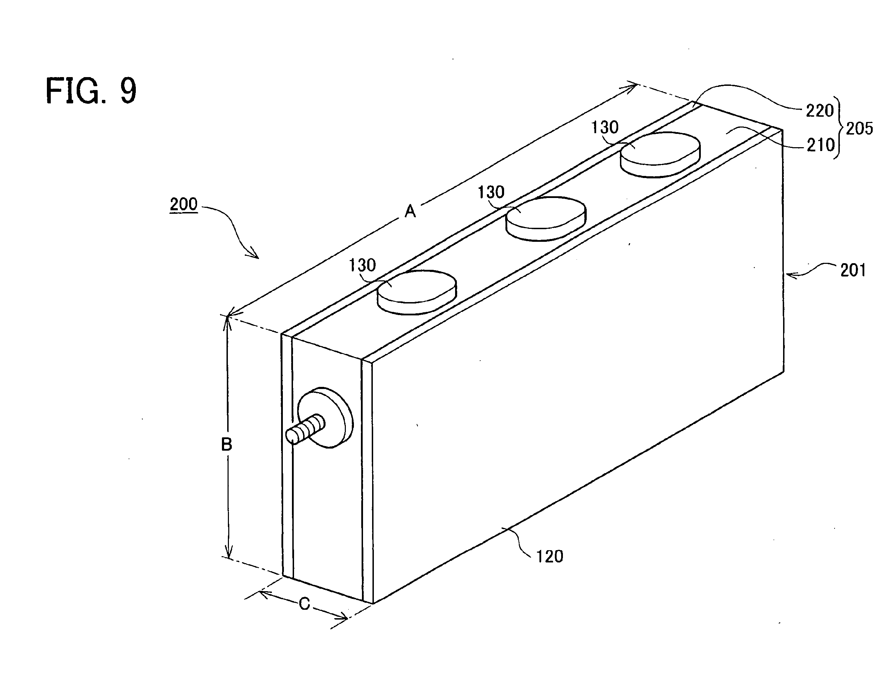

Referring to Fig. 9, the secondary battery 200 in the second embodiment is a nickel hydride storage battery that comprises a battery case 201 including a case body member 205 different in structure from that in the first embodiment, a cover member 120 and liquid inlet lids 130, which are identical to those in the first embodiment.

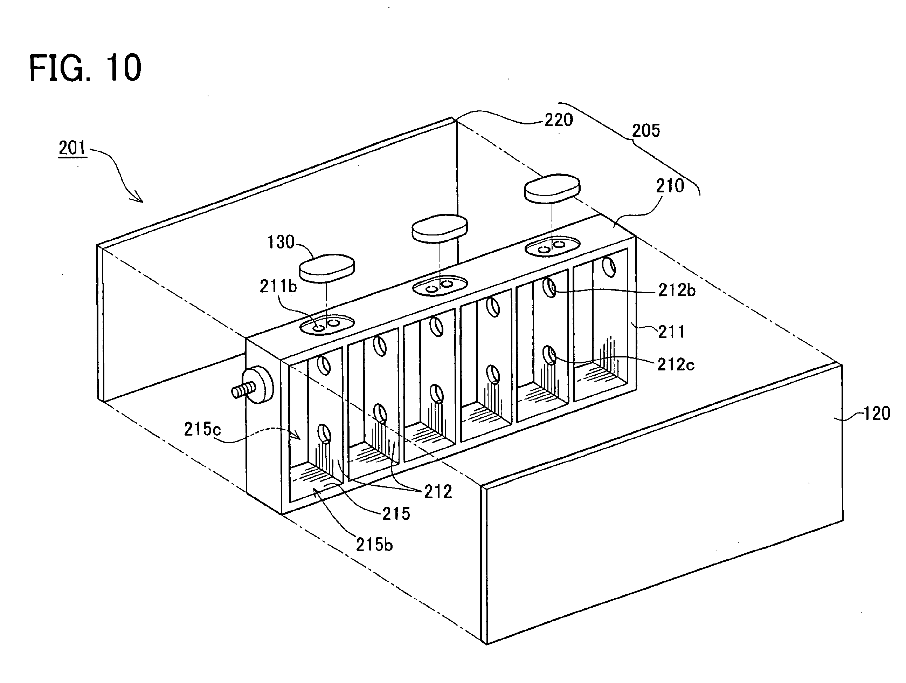

As shown in Fig. 10 (an exploded perspective view of the battery case 201), the case body member 205 has a rectangular parallelepiped shape and includes a shell member 210 and a closing member 220 which closes an opening 215c of the shell member 210, which is an opposite opening to the insertion opening 215b. The shell member 210 includes a rectangular frame 211 and five partition walls 212 partitioning the frame 211 into six housing parts 215, which are made integrally of resin by injection molding. The closing member 220 is identical in structure to the cover member 120, as shown in Fig. 4. In the second embodiment, the shell member 210 and the closing member 220 are united into one piece by heat welding to form the case body member 205.

As shown in Fig. 9, in the secondary battery 200 in the second embodiment, as with the secondary battery 100 in the first embodiment, the battery case 201 is compartmentalized into the cover member 120 and the case body member 205 in the direction of depth C (referred to as the minimum dimension direction in the second embodiment) which is the smallest in dimension among the width A, the height B, and the depth C. Specifically, the case body member 205 is designed to have the shallowest (smallest) depth. Accordingly, the length of the frame part of the shell member 210 (the dimension in the direction of depth C) is shortest. For manufacture of the secondary battery 200, therefore, injection molding of the shell member 210 can be facilitated. Insertion of each electrode plate group 150 into each housing part 215 can also be facilitated. Consequently, the secondary battery 200 in the second embodiment can be provided inexpensively as with the secondary battery 100 in the first embodiment.

In the second battery 200 in the second embodiment using the cover member 120 including the metal plate 121, the closing member 220 including a metal plate 221 is further used as a closing member (see Fig. 4). Not only the cover member 120 but also the closing member 220 are good in heat dispersion characteristics and hence the secondary battery 200 in the second embodiment can have a better cooling property than the second battery 100 in the first embodiment. Further, not only the cover member 120 but also the closing member 270 can prevent hydrogen gas or the like from pasting through the battery case 201 to leak out. The secondary battery 200 in the second embodiment is, consequently, superior to the secondary battery 100 in the first embodiment in preventing hydrogen gas or the like to leak out, thereby restraining a deterioration of battery characteristics.

In the secondary battery 200 in the second embodiment, as with the secondary battery 100 in the first embodiment, the positive electrode plates 151 and the negative electrode plates 152 placed in the adjoining housing parts 215 are electrically connected to each other through the first and second through-holes 212b and 212c (see Figs. 7 and 8). This makes it possible to reduce the internal resistance to increase output power of the battery. In the second embodiment, the second through-hole 212c corresponds to the inter-electrode plate through-hole.

As in the case of the first embodiment, the work of welding the electrically conductive connection plates 165 and 166 through the second through-hole 112c can be performed through the insertion opening 115b. Further, the work of welding the bent end 155d of the positive electrode current collector 155 and the bent end 165c of the electrically conductive connection plate 165 and the work of welding the bent end 156d of the negative electrode current collector 156 and the bent end 166c of the electrically conductive connection plate 166 can also be conducted through the insertion opening 115b. Thus, different from the conventional secondary battery disclosed in for example JP2003-282043A, the secondary battery 200 needs having no additional opening and no sealing member and thus can be provided inexpensively.

In the second embodiment, as the closing member that closes the opening 215c of the shell member 210, the closing member 220 including the metal plate 221 and the resin covering part 222 covering the metal plate 221 is used as shown in Fig. 4. As an alternative to the closing member 220, a closing member 270 including a resin plate 272 and a metal layer 271 made of a metallic foil (e.g., an aluminum foil) and laminated on the resin plate 272 as shown in Fig. 5 may be used. By the use of the closing member 270 provided with the metallic layer 271, it is possible to prevent hydrogen gas or the like from passing through the closing member 270 to leak out.

As another alternative to the closing member 220, a cover member 280 including a resin plate 282 and a multilayer film 281 (having a first resin layer 281b, a metallic layer 281c, and a second resin layer 281d) laminated on the resin plate 282 as shown in Fig. 6 may be used. Even when the closing member 280 including the metallic layer 281c as above is used, it is possible to prevent hydrogen gas or the like from passing through the closing member 280 to leak out. The first and second resin layers 281b and 281d may be for example resin films made of polypropylene. The metallic layer 281c may be for example a metallic foil made of aluminum.

In the second embodiment, as the cover member that closes the insertion openings 115b of the case body member 205, as shown in Fig. 4, the cover member 120 including the metal plate 121 and the resin covering part 122 covering the metal plate 121 is used. As an alternative to the cover member 120, the cover member 170 including the resin plate 172 and the metallic layer 171 made of a metallic foil (e.g., an aluminum foil) laminated on the resin plate 172 as shown in Fig. 5 may be used. Another alternative is to use the cover member 180 including the resin plate 182 and the multilayer film 181 (having the first resin layer 181b, the metallic layer 181c, and the second resin layer 181d) laminated on the resin plate 182 as shown in Fig. 6. As described above, the use of the cover member 170 including the metallic layer 171 or the cover member 180 including the metallic layer 171c makes it possible to prevent hydrogen gas or the like from passing through the cover member 170 or 180 to leak out.

Although the present invention is explained in the above first and second embodiments, the present invention may be embodied in other specific forms without departing from the essential characteristics thereof.

For instance, in the secondary batteries 100 and 200 in the first and second embodiments, the cover member 120 including the metal plate 121 is used as the cover member, but another cover member made of only resin may be used. In this case, the secondary battery has less the heat dispersion characteristics and the action of preventing hydrogen or the like from passing therethrough than the secondary batteries 100 and 200 in the first and second embodiments, but the manufacturing cost of the cover member can be reduced. The secondary battery can thus be provided inexpensively.

Further, the secondary batteries 100 and 200 in the first and second embodiments may be provided with a safety valve device respectively. The safety valve device is arranged to be activated if the internal pressure in the battery case 101 or 201 exceeds a predetermined value, thereby discharging internal gas (hydrogen gas or the like) to outside to prevent an increase in the internal pressure.

In the secondary batteries 100 and 200 in the first and second embodiments, furthermore, the electrode plate groups 150 (cells) placed in the housing parts are all connected in series, but part of them may be connected in parallel.

While the presently preferred embodiment of the present invention has been shown and described, it is to be understood that this disclosure is for the purpose of illustration and that various changes and modifications may be made without departing from the scope of the invention as set forth in the appended claims.

## Claims

1. A secondary battery comprising:
a plurality of electrode plate groups (150) each having a positive electrode plate (151), a negative electrode plate (152), and a separator (153); and
a battery case (101) including:
a case body member (110) of a rectangular parallelepiped shape having a plurality of housing parts (115) in which the plurality of electrode plate groups are housed respectively; and
a cover member (120) that closes insertion openings (115b) of the case body member (110), through which the electrode plate groups (150) are inserted in the
housing parts (115) respectively;
wherein the case body member (110) is made integrally of resin by injection molding, and
the battery case (101) is compartmentalized into the cover member (120) and the case body member (110) in a direction of a minimum dimension of the battery case among width, height, and depth, which are perpendicular to one another,
**characterized in that**
the case body member (110) is provided with one or more partition walls (112) that partition the case body member (110) into the plurality of housing parts (115),
wherein
each of the partition walls (112) is formed with one or more through holes (112b, 112c) each of which provides communication between adjoining two of the housing parts (115), and wherein
the positive electrode plate (151) and the negative electrode plate (152) placed in the housing part (115) are electrically connected directly or indirectly to any one of the positive electrode plate (151) and the negative electrode plate (152) placed in the adjoining housing part (115) through the one or more through holes (112b, 112c).

2. The secondary battery according to claim 1, wherein
the cover member (120) includes a metal plate (121) and a covering part (122) that is made of resin and covers the metal plate (121).

3. The secondary battery according to claim 1, wherein
the cover member (170, 180) includes a resin plate (172, 182) and a metallic layer (171, 181c) that is made of a metallic foil and laminated on at least one of an external surface and an internal surface of the resin plate (172, 182).

4. A secondary battery comprising:
a plurality of electrode plate groups (150) each having a positive electrode plate (151), a negative electrode plate (152), and a separator (153); and
a battery case (201) including:
a case body member (205) of a rectangular parallelepiped shape having a plurality of housing parts (215) in which the plurality of electrode plate groups (150) are housed respectively; and
a cover member (120, 170, 180) that closes insertion openings (215b) of the case body member (205), through which the electrode plate groups (150) are inserted in
the housing parts (215) respectively;
wherein the case body member (205) including:
a shell member (210) including a rectangular frame (211) and one or more partition walls (212) which partition the frame (211) into the plurality of housing parts (215), the shell member (210) being made integrally of resin by injection molding; and
a closing member (220, 270, 280) that closes an opening of the shell member, the opening being opposite to the insertion opening (215b);
the battery case (201) is compartmentalized into the cover member (120, 170, 180) and the case body member in a direction of a minimum dimension of the battery case among width, height, and depth, which are perpendicular to one another,
**characterized in that**
each of the partition walls (212) is formed with one or more through holes (212b, 212c) each of which provides communication between adjoining two of the housing parts (215), and wherein
the positive electrode plate (151) and the negative electrode plate (152) placed in the housing part (215) are electrically connected directly or indirectly to any one of the positive electrode plate (151) and the negative electrode plate (152) placed in the adjoining housing part (215) through the one or more through holes (212b, 212c).

5. The secondary battery according to claim 4, wherein
the cover member (120) includes a metal plate (121) and a covering part (122) that is made of resin and covers the metal plate (121).

6. The secondary battery according to claim 4, wherein
the cover member (170, 180) includes a resin plate (172, 182) and a metallic layer (171, 181c) that is made of a metallic foil and laminated on at least one of an external surface and an internal surface of the resin plate (172, 182).

7. The secondary battery according to any one of claims 4 to 6, wherein
the closing member (220) includes a metal plate (221) and a covering part (222) that is made of resin and covers the metal plate (221).

8. The secondary battery according to any one of claims 4 to 6, wherein
the closing member (270, 280) includes a resin plate (272, 282) and a metallic layer (271, 281c) that is made of a metallic foil and laminated on at least one of an external surface and an internal surface of the resin plate (272, 282).

9. The secondary battery according to any one on claims 1 to 8, wherein
the positive electrode plate (151) and the negative electrode plate (152) constituting each electrode plate group (150) are laminated in the direction of minimum dimension of the battery case (101, 201), the case body member (110, 205) includes the housing parts (115, 215) arranged in line in a direction perpendicular to the direction of minimum dimension,
at least one of the through holes (112b, 112c, 212b, 212c) in each partition wall (112, 212) is an inter-electrode plate through hole (112c, 212c) located between the electrode plate groups (150) housed in adjoining two of the housing parts (115, 215) interposing the partition wall (112, 212), and
the positive electrode plate (151) and the negative electrode plate (152) placed in the housing part (115, 215) are electrically connected directly or indirectly to any one of the positive electrode plate (151) and the negative electrode plate (152) placed in the adjoining housing part (115, 215) through at least the inter-electrode plate through hole (112c, 212c) of the through holes (112b, 112c, 212b, 212c).

## Patentansprüche

1. Sekundärbatterie, aufweisend:
eine Mehrzahl von Elektrodenplattengruppen (150), die jeweils eine positive Elektrodenplatte (151), eine negative Elektrodenplatte (152) und einen Separator (153) aufweisen; und
einen Batteriekasten (101), der beinhaltet:
ein Kastenaufbauelement (110) von einer rechtwinkeligen Parallelepipedform mit einer Mehrzahl von Gehäuseteilen (115), in denen die Mehrzahl der Elektrodenplattengruppen jeweils untergebracht ist; und
ein Abdeckungselement (120), das Einbringungsöffnungen (115b) des Kastenaufbauelements (110) abschließt, durch die die Elektrodenplattengruppen (150) jeweils in die Gehäuseteile (115) eingebracht werden;
wobei das Kastenaufbauelement (110) durch Spritzgießen einstückig aus Harz gefertigt ist, und
der Batteriekasten (101) in Richtung einer Mindestabmessung des Batteriekastens aus einer Breite, Höhe und Tiefe, die im rechten Winkel zueinander verlaufen, in das Abdeckungselement (120) und das Kastenaufbauelement (110) aufgeteilt ist, **dadurch gekennzeichnet, dass**
das Kastenaufbauelement (110) mit einer oder mehreren Trennwänden (112) versehen ist, die das Kastenaufbauelement (110) in die Mehrzahl von Gehäuseteilen (115) abteilen, wobei
eine jeweilige der Trennwände (112) mit einer oder mehreren Durchgangsöffnungen (112b, 112c) ausgebildet ist, die jeweils eine Verbindung zwischen zwei angrenzenden Gehäuseteilen (115) ermöglichen, und wobei
die positive Elektrodenplatte (151) und die negative Elektrodenplatte (152), die in dem Gehäuseteil (115) positioniert sind, direkt oder indirekt mit jeweils der positiven Elektrodenplatte (151) und der negativen Elektrodenplatte (152), die in dem angrenzenden Gehäuseteil (115) angeordnet ist, durch die eine oder mehreren Durchgangsöffnungen (112b, 112c) elektrisch verbunden sind.

2. Sekundärbatterie nach Anspruch 1, wobei
das Abdeckungselement (120) eine Metallplatte (121) und ein Abdeckteil (122) beinhaltet, das aus Harz gefertigt ist und die Metallplatte (121) abdeckt.

3. Sekundärbatterie nach Anspruch 1, wobei
das Abdeckungselement (170, 180) eine Harzplatte (172, 182) und eine metallische Schicht (171, 181c) beinhaltet, die aus einer metallischen Folie gefertigt ist und auf zumindest entweder eine äußere Oberfläche oder eine innere Oberfläche der Harzplatte (172, 182) geschichtet ist.

4. Sekundärbatterie, aufweisend:
eine Mehrzahl von Elektrodenplattengruppen (150), die jeweils eine positive Elektrodenplatte (151), eine negative Elektrodenplatte (152) und einen Separator (153) aufweist; und
einen Batteriekasten (201), beinhaltend:
ein Kastenaufbauelement (205) von einer rechtwinkeligen Parallelepipedform mit einer Mehrzahl von Gehäuseteilen (215), in denen die Mehrzahl von Elektrodenplattengruppen (150) jeweils untergebracht ist; und
ein Abdeckungselement (120, 170, 180), das Einbringungsöffnungen (215b) des Kastenaufbauelements (205) abschließt, durch die die Elektrodenplattengruppen (150) jeweils in die Gehäuseteile (115) eingebracht werden;
wobei das Kastenaufbauelement (205) beinhaltet:
ein Umhüllungselement (210), das einen rechtwinkeligen Rahmen (211) und eine oder mehrere Trennwände (212) beinhaltet, die den Rahmen (211) in die Mehrzahl von Gehäuseteilen (215) abteilen, wobei das Umhüllungselement (210) durch Spritzgießen einstückig aus Harz gefertigt ist, und
ein Abschließelement (220, 270, 280), das eine Öffnung des Umhüllungselements abschließt, wobei die Öffnung der Einbringungsöffnung (215b) gegenüberliegt;
der Batteriekasten (201) in Richtung einer Mindestabmessung des Batteriekastens aus einer Breite, Höhe und Tiefe, die im rechten Winkel zueinander verlaufen, in das Abdeckungselement (120, 170, 180) und das Kastenaufbauelement aufgeteilt ist, **dadurch gekennzeichnet, dass**
eine jeweilige der Trennwände (212) mit einer oder mehreren Durchgangsöffnungen (212b, 212c) ausgebildet ist, die jeweils eine Verbindung zwischen zwei angrenzenden Gehäuseteilen (115) ermöglichen, und wobei
die positive Elektrodenplatte (151) und die negative Elektrodenplatte (152), die in dem Gehäuseteil (215) positioniert sind, direkt oder indirekt mit jeweils der positiven Elektrodenplatte (151) und der negativen Elektrodenplatte (152), die in dem angrenzenden Gehäuseteil (215) angeordnet ist, durch die eine oder mehreren Durchgangsöffnungen (212b, 212c) elektrisch verbunden sind.

5. Sekundärbatterie nach Anspruch 4, wobei
das Abdeckungselement (120) eine Metallplatte (121) und ein Abdeckteil (122) beinhaltet, das aus Harz gefertigt ist und die Metallplatte (121) abdeckt.

6. Sekundärbatterie nach Anspruch 4, wobei
das Abdeckungselement (170, 180) eine Harzplatte (172, 182) und eine metallische Schicht (171, 181c) beinhaltet, die aus einer metallischen Folie gefertigt ist und auf zumindest entweder eine äußere Oberfläche oder eine innere Oberfläche der Harzplatte (172, 182) geschichtet ist.

7. Sekundärbatterie nach einem der Ansprüche 4 bis 6, wobei
das Abschließelement (220) eine Metallplatte (221) und ein Abdeckteil (222) beinhaltet, das aus Harz gefertigt ist und die Metallplatte (221) bedeckt.

8. Sekundärbatterie nach einem der Ansprüche 4 bis 6, wobei
das Abschließelement (270, 280) eine Harzplatte (272, 282) und eine metallische Schicht (271, 281c) beinhaltet, die aus einer metallischen Folie gefertigt ist und auf zumindest entweder ein äußere Oberfläche oder eine innere Oberfläche der Harzplatte (272, 282) geschichtet ist.

9. Sekundärbatterie nach einem der Ansprüche 1 bis 8, wobei
die positive Elektrodenplatte (151) und die negative Elektrodenplatte (152), die jeweils eine Elektrodenplattengruppe (150) bilden, in der Richtung der Mindestabmessung des Batteriekastens (101, 201) geschichtet sind,
das Kastenaufbauelement (110, 205) die Gehäuseteile (115, 215) beinhaltet, die nacheinander in einer Richtung senkrecht zur Richtung der Mindestabmessung angeordnet sind,
zumindest eine der Durchgangsöffnungen (112b, 112c, 212b, 212c) in einer jeweiligen Trennwand (112, 212) eine Zwischenelektrodenplatten-Durchgangsöffnung (112c, 212c) ist, die zwischen den Elektrodenplattengruppen (150) positioniert ist, die in zwei angrenzenden Gehäuseteilen (115, 215) untergebracht sind, die zwischen der Trennwand (112, 212) liegen, und
die positive Elektrodenplatte (151) und die negative Elektrodenplatte (152), die in dem Gehäuseteil (115, 215) positioniert sind, direkt oder indirekt mit jeweils der positiven Elektrodenplatte (151) und der negativen Elektrodenplatte (152), die in dem angrenzenden Gehäuseteil (115, 215) positioniert ist, durch zumindest die Zwischenelektrodenplatten-Durchgangsöffnung (112c, 212c) der Durchgangsöffnungen (112b, 112c, 212b, 212c) elektrischen verbunden sind.

## Revendications

1. Batterie secondaire comportant :
une multiplicité de groupes de plaques d'électrode (150) ayant chacun une plaque d'électrode positive (151), une plaque d'électrode négative (152), et un séparateur (153) ; et
un boîtier de batterie (101) comprenant :
un élément de corps de boîtier (110) d'une forme parallélépipède rectangulaire ayant une multiplicité de parties de logement (115) dans lesquelles la multiplicité de groupes de plaques d'électrode est logée d'une manière respective ; et
un élément de couvercle (120) qui ferme des ouvertures d'insertion (115b) de l'élément de corps de boîtier (110), à travers lesquelles les groupes de plaques d'électrode (150) sont insérés dans les parties de logement (115) d'une manière respective ;
l'élément de corps de boîtier (110) est intégralement fabriqué en résine par moulage par injection, et
le boîtier de batterie (101) étant compartimenté dans l'élément de couvercle (120) et l'élément de corps de boîtier (110) dans une direction d'une dimension minimum du boîtier de batterie parmi la largeur, la hauteur, et la profondeur, qui sont perpendiculaires l'une à l'autre,
**caractérisée en ce que**
l'élément de corps de boîtier (110) est pourvu d'une ou plusieurs parois de séparation (112) qui séparent l'élément de corps de boîtier (110) en la multiplicité de parties de logement (115),
chacune des parois de séparation (112) étant formée avec un ou plusieurs trous débouchants (112b, 112c) qui assurent chacun une communication entre deux parties adjacentes des parties de logement (115), et
la plaque d'électrode positive (151) et la plaque d'électrode négative (152) placées dans la partie de logement (115) étant électriquement reliées directement ou indirectement à n'importe laquelle de la plaque d'électrode positive (151) et de la plaque d'électrode négative (152) placée dans la partie de logement adjacente (115) à travers un ou plusieurs trous débouchants (112b, 112c).

2. Batterie secondaire selon la revendication 1, dans laquelle
l'élément de couvercle (120) comprend une plaque métallique (121) et une partie de recouvrement (122) qui est fabriquée en résine et recouvre la plaque métallique (121).

3. Batterie secondaire selon la revendication 1, dans laquelle
l'élément de couvercle (170, 180) comprend une plaque en résine (172, 182) et une couche métallique (171, 181c) qui se compose d'une feuille métallique et est stratifiée sur au moins une surface externe ou une surface interne de la plaque en résine (172, 182).

4. Batterie secondaire comportant :
une multiplicité de groupes de plaques d'électrode (150) ayant chacun une plaque d'électrode positive (151), une plaque d'électrode négative (152), et un séparateur (153) ; et
un boîtier de batterie (201) comprenant :
un élément de corps de boîtier (205) d'une forme parallélépipède rectangulaire ayant une multiplicité de parties de logement (215) dans lesquelles la multiplicité de groupes de plaques d'électrode (150) est logée d'une manière respective ; et
un élément de couvercle (120, 170, 180) qui ferme des ouvertures d'insertion (215b) de l'élément de corps de boîtier (205), à travers lesquelles les groupes de plaques d'électrode (150) sont insérés dans les parties de logement (115) d'une manière respective ;
l'élément de corps de boîtier (205) comprenant :
un élément d'enveloppe (210) comprenant un cadre rectangulaire (211) et une ou plusieurs parois de séparation (212) qui séparent le cadre (211) en la multiplicité de parties de logement (215), l'élément d'enveloppe (210) étant intégralement fabriqué en résine par moulage par injection ; et
un élément de fermeture (220, 270, 280) qui ferme une ouverture de l'élément d'enveloppe, l'ouverture étant opposée à l'ouverture d'insertion (215b) ;
le boîtier de batterie (201) étant compartimenté dans l'élément de couvercle (120, 170, 180) et l'élément de corps de boîtier dans une direction d'une dimension minimum du boîtier de batterie parmi la largeur, la hauteur, et la profondeur, qui sont perpendiculaires l'une à l'autre,
**caractérisée en ce que**
chacune des parois de séparation (212) est formée avec un ou plusieurs trous débouchants (212b, 212c) qui assurent chacun une communication entre deux parties adjacentes des parties de logement (215), et
la plaque d'électrode positive (151) et la plaque d'électrode négative (152) placées dans la partie de logement (215) sont électriquement reliées directement ou indirectement à n'importe laquelle de la plaque d'électrode positive (151) et de la plaque d'électrode négative (152) placée dans la partie de logement adjacente (215) à travers un ou plusieurs trous débouchants (212b, 212c).

5. Batterie secondaire selon la revendication 4, dans laquelle
l'élément de couvercle (120) comprend une plaque métallique (121) et une partie de recouvrement (122) qui est fabriquée en résine et recouvre la plaque métallique (121).

6. Batterie secondaire selon la revendication 4, dans laquelle
l'élément de couvercle (170, 180) comprend une plaque en résine (172, 182) et une couche métallique (171, 181c) qui est se compose d'une feuille métallique et est stratifiée sur au moins une surface externe ou une surface interne de la plaque en résine (172, 182).

7. Batterie secondaire selon l'une quelconque des revendications 4 à 6, dans laquelle
l'élément de fermeture (220) comprend une plaque métallique (221) et une partie de recouvrement (222) qui est fabriquée en résine et recouvre la plaque métallique (221).

8. Batterie secondaire selon l'une quelconque des revendications 4 à 6, dans laquelle
l'élément de fermeture (270, 280) comprend une plaque en résine (272, 282) et une couche métallique (271, 281c) qui se compose d'une feuille métallique et est stratifiée sur au moins une surface externe ou une surface interne de la plaque en résine (272, 282).

9. Batterie secondaire selon l'une quelconque des revendications précédentes 1 à 8, dans laquelle
la plaque d'électrode positive (151) et la plaque d'électrode négative (152) constituant chaque groupe de plaques d'électrode (150) sont stratifiées dans la direction de la dimension minimum du boîtier de batterie (101, 201),
l'élément de corps de boîtier (110, 205) comprend les parties de logement (115, 215) disposées en ligne dans une direction perpendiculaire à la direction de dimension minimum,
au moins un des trous débouchants (112b, 112c, 212b, 212c) dans chaque paroi de séparation (112, 212) est un trou débouchant de plaque inter-électrode (112c, 212c) disposé entre les groupes de plaques d'électrode (150) logés dans deux parties adjacentes des parties de logement (115, 215) entourant la paroi de séparation (112, 212), et
la plaque d'électrode positive (151) et la plaque d'électrode négative (152) placées dans la partie de logement (115, 215) sont électriquement reliées directement ou indirectement à n'importe laquelle de la plaque d'électrode positive (151) et de la plaque d'électrode négative (152) placée dans la partie de logement adjacente (115, 215) à travers au moins le trou débouchant de plaque inter-électrode (112c, 212c) des trous débouchants (112b, 112c, 212b, 212c).
